# EUROPEAN PATENT SPECIFICATION

(11) **EP 0 398 509 B1**
(45) Date of publication and mention of the grant of the patent: **05.10.1994**
(21) Application number: 90304296.8
(22) Date of filing: 20.04.1990
(51) Int. Cl.: B60R 16/02

(54) **Monitoring circuit**
Überwachungsstromkreis
Circuit de surveillance

(30) Priority: 16.05.1989 GB 8911216
(43) Date of publication of application: 22.11.1990
(73) Proprietor: DELCO ELECTRONICS OVERSEAS CORPORATION (a Delaware corp.), Detroit, Michigan 48202 (US)
(72) Inventor: Allan, David Stewart, Wigan, Greater Manchester (GB)
(74) Representative: Denton, Michael John

(56) References cited:
- US-A- 3 614 731
- US-A- 4 137 770
- US-A- 4 417 231
- US-A- 4 623 798
- ELEKTOR, vol. 7, nos. 7/8, July/August 1981, page 58, Canterbury, Kent, GB;"Temperature alarm"
- ELECTRONIC ENGINEERING, vol. 47, no. 574, December 1975, page 9, Trent Polytechnic, Nottingham, GB; M: PLANT: "Car temperature alarm warns of ice formation"

## Description

This invention relates to a monitoring circuit including a gauge and a warning light or other warning device. This invention has particular application in motor vehicles.

It has become common practice to include warning lights, as well as gauges, in motor vehicles. The gauges give an indication of fuel level, engine coolant temperature, etc. and the warning lights provide an additional indication of an abnormal condition such as low fuel level, high coolant temperature, low oil pressure, etc. In situations where both a gauge and a warning light are provided for monitoring a particular condition, it is usual practice to use the conventional gauge circuit to provide the electrical signal for the warning light. For example, a conventional fuel level monitoring circuit has a sensor or sender having a resistance which varies with fuel level located in the fuel tank and a fuel gauge located in the instrument cluster of the motor vehicle. The warning light and associated circuitry is usually located close to the gauge. The associated circuitry monitors the voltage available at the gauge and compares it with a predetermined voltage level which is intended to represent the warning level.

These known monitoring circuits rely on the resistance of the gauge being a known value. In practice, however, the gauge resistance varies from one gauge to another (due to production tolerances and other factors), and hence much testing is required before a final value of gauge resistance can be determined. Other factors (such as drift due to warm-up; temperature variations; etc.) also cause the gauge resistance to vary whilst in use, and hence can result in inaccurate triggering of the warning light.

US-A-4,417,231 discloses a prior art arrangement in accordance with the preamble of claim 1.

It is an object of the present invention to overcome the above mentioned disadvantages.

To this end, a monitoring circuit in accordance with the present invention is characterised over US-A-4,417,231 by the features specified in the characterising portion of claim 1.

The sensor resistance and the first, second and third resistor define a wheatstone bridge, and the voltage comparator detects changes in voltage difference at the centre junctions of each arm of the wheatstone bridge. The gauge does not form part of the wheatstone bridge. This invention therefore has the advantage that the resistance of the gauge is not influential in the activation of the warning device. Its value prior to installation does not have to be known, and any variations in its resistance during usage does not affect the activation of the warning device. The activation point of the warning device can therefore be accurately predetermined.

The first voltage level is preferably a supply voltage, and the second voltage level is preferably electrical ground.

Preferably, the first voltage level is provided from an ignition circuit of a motor vehicle.

The sensor is preferably a temperature sensor in the form of a thermistor. Alternatively, the sensor may be a fuel level monitor or oil pressure monitor.

Preferably, the warning device is a warning light. In this case, the monitoring circuit preferably includes a resistor which acts to provide hysteresis by feeding back a small voltage when the warning light is activated.

The present invention will now be described, by way of example, with reference to the accompanying drawings, in which:-
Figure 1 is a schematic of a basic monitoring circuit in accordance with the present invention; and
Figure 2 is a more detailed schematic of a monitoring circuit in accordance with the present invention.

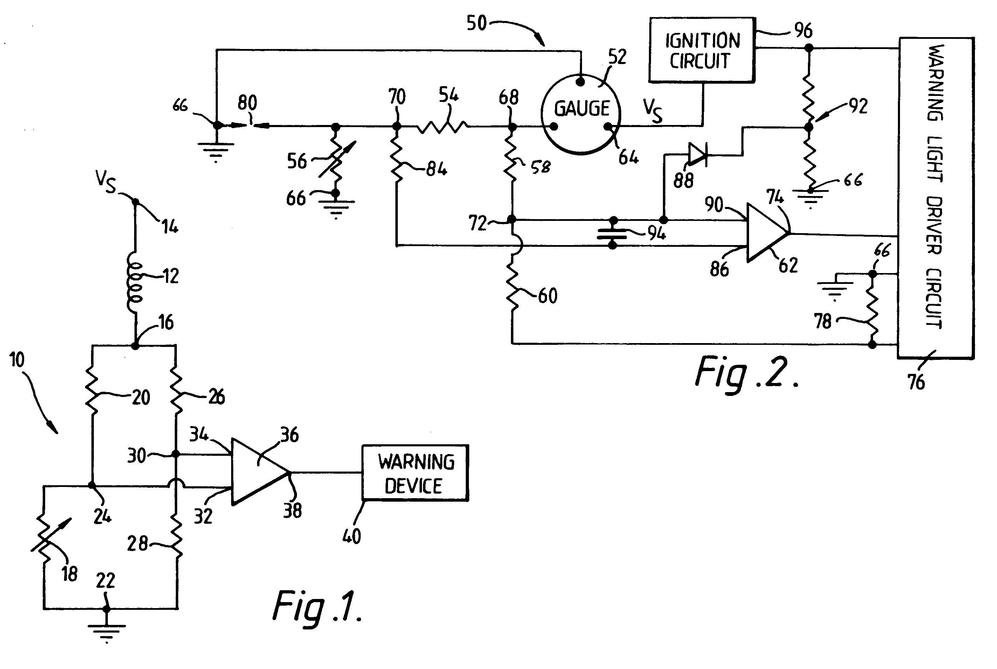

Referring to Figure 1, the basic monitoring circuit 10 shown therein comprises a gauge having a coil 12 connected between a first terminal 14 and a first junction 16. A sensor 18 having a variable resistance is connected in series with a first resistor 20 having a fixed resistance between the first junction 16 and a second terminal 22. A second junction 24 is defined between the sensor 18 and the first resistor 20. A second resistor 26 and a third resistor 28, each having a fixed resistance, are connected in series between the first junction 16 and the second terminal 22. The second and third resistors 26,28 define a third junction 30 therebetween. The second and third junctions 24,30 are connected to the inputs 32,34 respectively of a voltage comparator 36. The output 38 of the voltage comparator 36 is connected to a warning device 40, which may be a warning light and associated driving circuit. The first terminal 14 is connected to a substantially constant supply voltage Vₛ, and the second terminal 22 is connected to electrical ground.

During normal operation of the monitoring circuit 10, the resistance of the sensor 18 is directly related to the state of the condition it is monitoring. At any moment in time, the current through the coil 12 of the gauge is dependent on the resistance of the sensor 18, with the gauge providing a visible readout of the actual state of the condition being monitored. Any changes in the monitored condition are reflected by a change in the resistance of the sensor 18, with a consequent change in the current through the coil 12, and a change in the readout provided by the gauge. Further, the voltage comparator 36 monitors and compares the voltage difference between the second and third junctions 24,30. Whilst this voltage difference remains within a predetermined specified range, no output voltage is generated at the output 38 of the voltage comparator 36.

If, however, an abnormal state arises, the voltage difference across the second and third junctions 24,30 falls outside the predetermined specified range (in this particular case, the voltage difference changes polarity), and an output voltage is generated at the output 38 of the voltage comparator 36. This output voltage triggers the warning device 40 to provide a visible or audible indication of an abnormal state of the condition being monitored.

This arrangement has the advantages over previously known arrangements of providing an accurate warning of an abnormal condition which is not affected by, or dependent on knowing, the resistance of the coil 12 of the gauge. Sensor 18 and first, second and third resistors 20,26,28 define a wheatstone bridge circuit. Any change in the voltage level at the first junction 16, due to resistance changes in the coil 12, equally affect both sides of the wheatstone bridge, and hence do not affect the predetermined point at which an output voltage is provided at the output 38 of the voltage comparator 36. This arrangement also provides a simple, cheap arrangement for overcoming the problems associated with previously known arrangements.

Knowing the resistive range of the sensor 18, the values of the first, second and third resistors 20,26,28 are selected to provide the predetermined point at which the warning device is required to be activated. In a preferred arrangement, the values of the first, second and third resistors 20,26,28 are selected such that during normal operation the voltage at the third junction 30 is less than the voltage at the second junction 24, and such that during abnormal conditions the voltage at the second junction 24 is less than the voltage at the third junction 30. The voltage comparator 36 compares the voltages at the second and third junctions 24,30, and activates the warning device when a "null" point is detected in the wheatstone bridge circuit.

Referring now to the more detailed monitoring circuit 50 shown in Figure 2, this circuit is suitable for monitoring the temperature of the engine coolant of a motor vehicle. The monitoring circuit 50 comprises a temperature gauge 52, a first resistor 54, a temperature sensor 56, a second resistor 58, a third resistor 60, a voltage comparator 62, first and second terminals 64,66 respectively, and first, second and third junctions 68,70,72 respectively. All of these elements act in a similar manner to the correspondingly named elements in Figure 1. The output 74 of the voltage comparator 62 is connected to a warning light driver circuit 76 which activates a warning light (not shown) when an output voltage is generated at the output 74.

The temperature gauge 52 is mounted in the instrument cluster (not shown) of the motor vehicle. The first terminal 64 is on the temperature gauge 52 and is connected with the ignition circuit 96 of the motor vehicle. A supply voltage Vₛ is provided at the first terminal 64 when the ignition is switched on.

The temperature sensor 56 is in the form of a thermistor, and is mounted on the engine block of the motor vehicle to monitor the temperature of the engine coolant. As the temperature of the coolant rises, the resistance of the thermistor falls, and vice versa. The value of the first resistor 54 is kept as low as possible so as to maintain an adequate supply voltage across the thermistor, but high enough to provide an adequate signal for the voltage comparator 62. In a typical example, the thermistor has a resistance of approximately 60 ohms at the temperature at which the warning light is to be activated, and the first resistor 54 has a value of 1.6 ohms. The second and third resistors 58,60 are selected to provide the same ratio at the warning light activation temperature. In a similar manner to the preferred arrangement of the voltage comparator 36 of Figure 1, the voltage comparator 62 provides an output voltage at its output 74 when the voltage difference across the second and third junctions 70,72 reaches a null.

The monitoring circuit 50 also includes a resistor 78 which acts to provide hysteresis by feeding back a small voltage when the warning light is activated. This arrangement helps to provide positive activation/deactivation of the warning light, and prevent it flickering.

A spark gap 80 is connected between the second junction 70 and electrical ground. A resistor 84 is connected between the second junction 70 and one of the inputs 86 of the voltage comparator 62. A diode 88 connects the other input 90 (which is connected to the third junction 72) of the voltage comparator 62 to the ignition circuit 96 by way of a voltage divider 92. A capacitor 94 is connected across the inputs 86,90 of the voltage comparator 62. These components are optional, but help to make the monitoring circuit 50 more tolerant to the effects of electro-static discharge, radio frequency interference, and abnormal supply voltages.

The monitoring circuit 50 acts in the same manner as the preferred operation of the monitoring circuit 10 shown in Figure 1 and described above, and has the same advantages. When the engine coolant temperature reaches an abnormally high level, the voltage difference across the second and third junctions 70,72 passes through a null or changes polarity. The condition is detected by the voltage comparator 62, and an output voltage is generated at the output 74. The output voltage signal is detected by the warning light driver circuit 76, and the warning light is lit.

In motor vehicle applications, similar monitoring circuits can be used to activate warning lights when abnormally low fuel level or abnormally low oil pressure in the engine is detected.

## Claims

1. A monitoring circuit (10;50) comprising a first terminal (14;64) at a first voltage level (Vₛ); a second terminal (22;66) at a second, different, voltage level; a gauge (12;52) connected between the first terminal (14;64) and a first junction (16;68) a sensor (18;56) having a variable resistance and a first resistor (20;54) having a fixed resistance connected in series and defining a second junction (24;70) therebetween; a second and a third resistor (26,28;58,60) each having a fixed resistance connected in series and defining a third junction (30;72) therebetween; a voltage comparator (36;62) having inputs (32,34;86,90) connected to the second and third junctions (24,30;70,72) and a warning device (40;76) connected to the output (38;74) of the voltage comparator (36;62); characterised in that the sensor (18;56) and the first resistor (20;54) are connected between the first junction (16;68) and the second terminal (22;66); in that the second and third resistors (26,28;58,60) are connected between the first junction (16;68) and the second terminal (22;66); and in that the warning device (40;76) is actuated by the voltage comparator (36;62) when the voltage at the second junction (24;70) reaches or passes through a predetermined level in comparison with the voltage at the third junction (30;72), wherein the predetermined level is a null or a change in polarity in the voltage difference across the second and third junctions (24,30;70,72).

2. A monitoring circuit as claimed in Claim 1, wherein the first voltage level is a supply voltage (Vₛ), and the second voltage level is electrical ground.

3. A monitoring circuit as claimed in Claim 1 or Claim 2, wherein the first voltage level is provided from an ignition circuit (96) of a motor vehicle.

4. A monitoring circuit as claimed in any one of Claims 1 to 3, wherein the sensor (18;56) is a temperature sensor (56) in the form of a thermistor.

5. A monitoring circuit as claimed in any one of Claims 1 to 4, wherein the warning device (40) is a warning light.

6. A monitoring circuit as claimed in Claim 5 including a resistor (78) Between the third resistor (60) and the second terminal (66) which acts to provide hysteresis by feeding back a small voltage when the warning light is activated.

## Patentansprüche

1. Eine Überwachungsschaltung (10; 50) mit einem ersten Anschluß (14; 64) bei einem ersten Spannungspegel (*V*_{*s*}); einem zweiten Anschluß (22, 66) bei einem zweiten, verschiedenen bzw. abweichenden Spannungspegel; einem Meßinstrument (12; 52), das zwischen den ersten Anschluß (14; 64) und eine erste Verbindung (16; 68) geschaltet ist; einem Meßwertgeber (18; 56) mit einem variablen Widerstand und einem ersten Widerstand (20; 54) mit einem festen Widerstand, die in Reihe geschaltet sind und eine zweite Verbindung (24; 70) dazwischen definieren; einem zweiten und dritten Widerstand (26, 28; 58, 60), die jeweils einen festen Widerstand besitzen, in Reihe geschaltet sind und eine dritte Verbindung (30; 72) dazwischen definieren; einem Spannungskomparator (36; 62) mit Eingängen (32, 34; 86, 90), die mit den zweiten und dritten Verbindungen (24, 30; 70, 72) verbunden sind; und einer Warnvorrichtung (40; 76), die mit dem Ausgang (38; 74) des Spannungskomparators (36; 62) verbunden ist; dadurch gekennzeichnet, daß der Meßwertgeber (18; 56) und der erste Widerstand (20; 54) zwischen die erste Verbindung (16; 68) und den zweiten Anschluß (22; 66) geschaltet sind; dadurch, daß die zweiten und dritten Widerstände (26, 28; 58, 60) zwischen die erste Verbindung (16; 68) und den zweiten Anschluß (22; 66) geschaltet sind; und dadurch, daß die Warnvorrichtung (40; 76) durch den Spannungskomparator (36; 62) betätigt wird, wenn die Spannung bei der zweiten Verbindung (24; 70) einen vorher bestimmten Pegel im Vergleich mit der Spannung bei der dritten Verbindung (30; 72) erreicht oder durch ihn geht, worin der vorher bestimmte Pegel eine Null oder eine Änderung in einer Polarität in der Spannungsdifferenz über die zweiten und dritten Verbindungen (24, 30; 70, 72) ist.

2. Eine Überwachungsschaltung nach Anspruch 1, worin der erste Spannungspegel eine Versorgungsspannung (*V*_{*s*}) ist und der zweite Spannungspegel eine elektrische Erdung ist.

3. Eine Überwachungsschaltung nach Anspruch 1 oder Anspruch 2, worin der erste Spannungspegel von einer Zündschaltung (96) eines Motorfahrzeugs geliefert wird.

4. Eine Überwachungsschaltung nach irgendeinem der Ansprüche 1 bis 3, worin der Meßwertgeber (18; 56) ein Temperatur-Meßwertgeber (56) in der Form eines Thermistors ist.

5. Eine Überwachungsschaltung nach irgendeinem der Ansprüche 1 bis 4, worin die Warnvorrichtung (40) ein Warnlicht ist.

6. Eine Überwachungsschaltung nach Anspruch 5, die einen Widerstand (78) zwischen dem dritten Widerstand (60) und dem zweiten Anschluß (66) einschließt, welcher wirkt, um eine Hysterese durch Zurückführen einer geringen Spannung zu liefern, wenn das Warnlicht aktiviert wird.

## Revendications

1. Circuit de surveillance (10; 50) comprenant une première borne (14; 64) à un premier niveau de tension (Vs); une seconde borne (22; 66) à un second niveau de tension différent; un appareil de mesure (12; 52) connecté entre la première borne (14; 64) et une première jonction (16; 68); un capteur (18; 56) ayant une résistance variable et une première résistance (20; 54) ayant une valeur ohmique fixe connectés en série et définissant une seconde jonction (24; 70) entre eux; une seconde et une troisième résistances (26, 28; 58, 60) ayant chacune une valeur ohmique fixe connectées en série et définissant une troisième jonction (30; 72) entre elles; un comparateur de tension (36; 62) ayant des entrées (32, 34; 86, 90) connecté aux seconde et troisième jonctions (24, 30; 70, 72); et un dispositif d'avertissement (40; 76) connecté à la sortie (38; 74) du comparateur de tension (36; 62); caractérisé en ce que le capteur (18; 56) et la première résistance (20; 54) sont connectés entre la première jonction (16; 68) et la seconde borne (22; 66); en ce que les seconde et troisième résistances (26, 28; 58, 60) sont connectées entre la première jonction (16; 68) et la seconde borne (22; 66); et en ce que le dispositif d'avertissement (40; 76) est actionné par le comparateur de tension (36; 62) lorsque la tension à la seconde jonction (24; 70) atteint ou passe par un niveau prédéterminé par rapport à la tension à la troisième jonction (30; 72), le niveau prédéterminé étant un zéro ou un changement de polarité de la différence de tension aux bornes des seconde et troisième jonctions (24, 30; 70, 72).

2. Circuit de surveillance selon la revendication 1, dans lequel le premier niveau de tension est une tension d'alimentation (Vs), et le second niveau de tension est la masse électrique.

3. Circuit de surveillance selon la revendication 1 ou la revendication 2, dans lequel le premier niveau de tension est fourni par le circuit d'allumage (96) d'un véhicule à moteur.

4. Circuit de surveillance selon l'une quelconque des revendications 1 à 3, dans lequel le capteur (18; 56) est un capteur de température (56) se présentant sous la forme d'une thermistance.

5. Circuit de surveillance selon l'une quelconque des revendications 1 à 4, dans lequel le dispositif d'avertissement (40) est un avertisseur lumineux.

6. Circuit de surveillance selon la revendication 5 comportant une résistance (78) entre la troisième résistance (60) et la seconde borne (66) qui agit pour fournir une hystérésis par rétroaction d'une tension faible lorsque l'avertisseur lumineux est activé.
